# EUROPEAN PATENT APPLICATION

(11) **EP 2 085 269 A1**
(43) Date of publication of application: **05.08.2009**
(21) Application number: 08155190.5
(22) Date of filing: 25.04.2008
(51) Int. Cl.: B60R 21/013

(54) **Electronically controlled safety restraint system**

(30) Priority: 04.02.2008 US 12544
(71) Applicant: Island Pyrochemical Industries Corporation, Mineola, NY 11501 (US)
(72) Inventor: Parizat, Amnon, Old Westbury, NY 11568 (US)
(74) Representative: von Kirschbaum, Alexander

(57) **Abstract**

The electronically controlled safety restraint system (ECSRS) comprises at least one electronically controlled airbag module, at least one electronically controlled seat belt module and an electronic control unit (ECU) connected to modules to control and synchronize the operation of the modules continuously and electronically to provide an optimized airbag and seat belt restraint performance for maximum safety restraint protection and for minimized airbag and seat belt restraint load injuries.

## Description

This invention relates to an electronically controlled safety restraint system. More particularly, this invention relates to an electronically controlled safety restraint system for vehicles employing airbags and seat belts.

As is known, state-of-the-art automobile restraint systems employ, among other components, airbag inflators and seat belt modules to provide occupants with restraints during an automobile crash, for example as described in US Patent 5,626,359. These devices are connected to an electronic control unit (ECU). When the ECU receives a signal that a crash has occurred, the ECU, based on a safety algorithm that is stored in the ECU, will then send a signal to deploy the airbags at a certain time. The ECU may also send a signal to the seat belt module to deploy a seat belt pre-tensioner to eliminate any slack that may exist in the seat belt in order to place the occupant in a correct position for interaction with the airbag.

State-of-the-art airbag modules store a predetermined amount of energy in them that is released at once or in two steps to provide restraint for the occupant. Once ignited, the airbag deployment rate and the inflation rate of the airbag can no longer be controlled.

The deficiencies of the state-of-the-art airbag modules are discussed in detail in Published Patent Application 2006/0202454 published September 14, 2006 and US Patents 6,036,226 and 6,889,613.

State-of-the-art seat belt modules usually lock the seat belt spool when sensing a certain deceleration rate that is a result of a crash or a sudden stop. During a crash or a sudden stop, the occupant will accelerate forward and will be restrained against the locked restraining seat belt. Certain seat belt modules may have a load limiter built into the module that would allow, once certain predetermined occupant belts loads are reached, the seat belt spool to release more belt slack on a one or two time basis to reduce seat belt loads on the occupant.

The deficiencies of state-of-the-art seat belt modules are discussed in detail in US Patent 6,665,743.

The restraint performance range of the seat belt and airbag modules is generally predetermined prior to installation of these devices in a vehicle. These devices have limited ability to adjust their functionality and restraint performance prior to a crash and with even less possibilities to adjust their restraint performance during a crash to the specific characteristics of the occupant, such as size, weight and position, occupant seat belt tension or to the characteristics of the crash, such as the crash severity before or during the crash.

The restraint performances of an airbag and a seat belt module are not continuously synchronized or traded off before and during the crash, as they do not have electronic or other means to respond and adjust their performance continuously before or during a crash. State-of-the-art ECU's, which control these devices, do not have the capability to continuously control, synchronize and adjust the performance of these devices to optimize their restraint performance for maximum safety restraint protection and for minimized airbag and seat belts restraint load injuries.

As described in US 6,665,743, state-of-the-art ECU's can continuously adjust seat belt tension up or down before and during a crash, if the seat belt tension becomes too high or too low. As described in US Patents 6,036,226 and 6,889,613, state-of-the-art ECU's can continuously adjust the airbag inflation rate up or down and the subsequent airbag restraint capacity.

However, state-of-the-art ECU's cannot adjust up or down seat belt and airbag modules continuously and simultaneously or synchronize the restraint capacity of both seat belt and airbag modules to provide supplementary and complimentary restraint capacity to the occupant.

Accordingly, it is an object of the invention to be able to synchronize the restraint capacity of both seat belt and airbag modules during a vehicle crash.

It is another object of the invention to be able to synchronize the restraint capacity of both seat belt and airbag modules during a vehicle crash on a continuous basis.

Briefly, the invention provides an electronically controlled safety restraint system (ECSRS) for a vehicle and, particularly, for an occupant seated on a seat within the vehicle, that comprises at least one electronically controlled airbag module, at least one electronically controlled seat belt module and an electronic control unit (ECU).

The airbag module includes an inflatable airbag and an inflator for inflating the airbag at a variable rate of inflation to vary an occupant restraint load on an occupant.

The seat belt module includes a seat belt for enveloping an occupant of a seat with a predetermined tension in the belt and means for varying the tension in the belt.

The electronic control unit (ECU) is connected to the airbag module and the seat belt module to control and synchronize the operation of the airbag module and seat belt module continuously and electronically to provide an optimized airbag and seat belt restraint performance for maximum safety restraint protection and for minimized airbag and seat belt restraint load injuries.

A plurality of sensors are located about the vehicle, the seat, the airbag and the seat belt to deliver signals to the electronic control unit (ECU) representative of the occupant and the crash conditions before and during a crash for processing and assessment. Depending on a safety algorithm stored in the electronic control unit (ECU), electronic signals are directed from the electronic control unit (ECU) simultaneously to the airbag module and seat belt module to affect the function and control of each before and during a crash.

In particular, the electronic control unit is electronically connected to the means in the seat belt module for varying the tension in the belt and to the inflator for inflating the airbag for synchronizing the operation of the airbag module and seat belt module continuously. For example, the electronic control unit may send an electronic signal to the seat belt module to decrease the tension in the belt and a separate simultaneous electronic signal to the airbag module to vary the rate of inflation of the airbag to lower the occupant restraint load of the airbag on the occupant.

In accordance with the invention, the airbag modules and seat belt modules of a vehicle are connected simultaneously and communicate continuously with the electronic control unit (ECU) which can synchronize in real time and simultaneously control/effect the functionality of the airbag modules and seat belt modules for increased restrained performance and minimized restraint injuries to an occupant.

These and other objects and advantages of the invention will become more apparent from the following detailed description taken in conjunction with the accompanying drawing wherein:

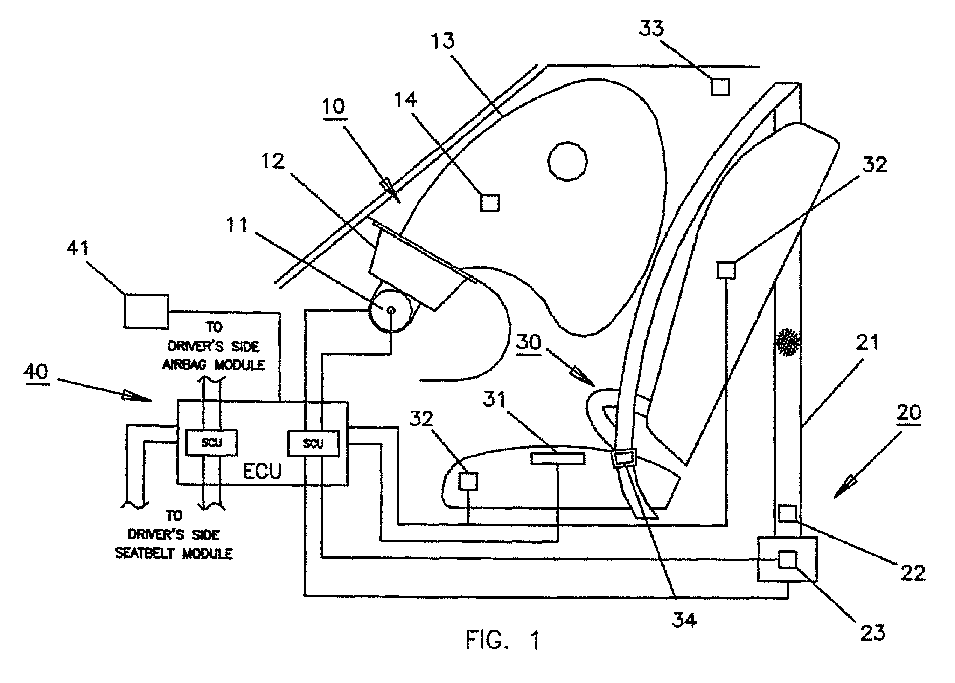

Fig. 1 illustrates a schematic view of an electronically controlled safety restraint system in accordance with the invention.

As illustrated, the electronically controlled safety restraint system (ECSRS) for a vehicle includes an airbag module 10 and a seat belt module 20 for each seat of a vehicle, for example, a passenger side seat, and an electronic control unit (ECU) 40 for controlling each module 10,20.

The airbag module 10 includes an airbag inflator 11 contained within a housing 12, an air bag 13 that can be inflated to extend out of the housing 12 and an airbag pressure sensor 14 on the airbag 13 for sensing the pressure within the airbag 13. The airbag module 10 is constructed as an electronically controlled airbag assembly module as described in Published Patent Application 2006/0202454 that can minimize airbag load injuries to an occupant and at the same time maximize the airbag restraint protection to the occupant. The inflator 11 is constructed as an electronically controlled airbag inflator that can continuously vary inflation rates as described in US Patents 6,665,743 and 6,036,226.

The seat belt module 20 includes a seat belt 21 and a seat belt tension sensor 22 for sensing the tension in the deployed seat belt 21. The seat belt module 20 is constructed as an electronically controlled seat belt module as described in US Patent 6,665,743 with means 23 for varying the tension in the belt 21 so as to vary the seat belt load on the occupant to minimize seat belt load injury and maximize the benefits of seat belt restraint protection.

As illustrated, the vehicle includes a seat 30 having an occupant weight sensor 31 and a pair of seat position sensors 32.

In addition, an occupant image sensor 33 is provided in the vehicle to sense the position of an occupant and a crash severity sensor 41 is provided within the vehicle to sense the severity of a crash.

As illustrated, when extended, the seat belt 21 is to envelop an occupant (not shown) seated on the seat 30. In addition, the seat belt has a seat belt buckle sensor 34 that senses whether the occupant is buckled or not buckled.

The ECU 40 is connected to the various sensors 14, 22, 31, 32, 33, 34 and 41 in the vehicle which, through electronic signals, provide the ECU 40 with continuous information before and during a crash. This information may include: information on airbag pressure and occupant airbag load, obtained from airbag pressure sensor 14; occupant seat belt loads, obtained from the seatbelt tension sensor 22; occupant weight, obtained from the occupant weight sensor 31; occupant seat position, obtained from the seat position sensors 32; occupant position, obtained from the occupant image sensor 33; whether the occupant is belted or not, obtained from the seatbelt buckle sensor 34; and crash severity information, obtained from the crash severity sensor 41.

For example, when the seat belt tension reaches a dangerously high occupant load, the seat belt tension needs to be released to prevent seat belt load injuries to the occupant. At the same time, the ECU 40 needs to adjust the airbag module inflation rate to supplement the seat belt restraint capacity that has been decreased as a result of the release of the seat belt tension, so that the occupant would then be cushioned and restrained by an airbag that would have an added restraint capacity for absorbing, and not deflecting, the moving forward occupant. The airbag would then provide a supplementary measured restraint capacity to the occupant with an occupant restraint load that is lower than what the seat belt, prior to its release, would have otherwise inflicted on the occupant.

By way of example, electronic control unit 40 is electronically connected to the means 23 in the seat belt module 20 and to the inflator 11 for simultaneously and continuously decreasing the tension in the belt 21 and varying the rate of inflation of the airbag 13 to lower the occupant restraint load of the airbag on the occupant.

In addition to other components, the ECU 40 includes several sub-control units (SCU) (two of which are illustrated in Fig. 1). Each SCU is connected to an airbag inflator 11 and to a seat belt module 20 that are fixed in the vehicle and controls the functionality of the airbag module 10 and seat belt module 20. The SCU is constructed in the manner of the control circuit 1 described in US Patent 6,564,717 for driving a gas generator as used for an airbag.

The control signals that are sent by the SCU to the airbag inflator 11 of the airbag module 10 and to the seatbelt module 20 can consist of a certain level of current (as measured in amperes) for a specific period of time, and driven by a specific level of voltage. The level of amperage and its duration of time can be continuously changed up or down depending on the specific performance that the ECU 40 has determined to be required from each of the airbag inflators 11 and the seat belt modules 20.

During operation, the ECU 40 continuously and simultaneously synchronizes the restraint capacity of both an airbag module 10 and seat belt module 20 by controlling the output of the associated SCU output to the inflator 11 of the airbag module 10 and the seat belt module 20 to provide supplementary and complimentary restraint capacity to the occupant.

The information that the ECU 40 acquires continuously from the sensors 14, 22, 31, 32, 33, 34 and 41 about the occupant and the crash conditions before and during a crash is processed and assessed by the ECU 40. The ECU 40 then determines through a safety algorithm that is stored within the ECU 40 what level of functionality would be required from the airbag inflator 11 and the seat belt module 20 and thereby continuously through electronic signals, affecting the function and control of the airbag module 10 and seat belt module 20 before and during a crash.

In this invention, having the airbag modules 10 and seat belt modules 20 electronically connected to the ECU 4 and having their restraint functionality continuously controlled, synchronized and modified allows a tailored restraint performance to be obtained in real time for occupants according to the variable occupant classification and crash conditions.

In this invention, the ECSRS can optimize the occupant's seat belt and airbag loads before and during a crash and minimize the excessive and injury causing seat belt and airbag loads that are associated with today's state-of-the-art and seat belt modules.

The ECSRS is able to control the impact time of the occupant with an airbag to enhance the airbag function to provide a damping restraint performance at the correct time for the specific crash and load parameters.

The ECSRS can transfer excessive restraint seat belt loads safely to a restraining bag and continuously optimize the distribution of seat belt loads and airbag loads to minimize occupant injury as a result of excessive loads and maximize the restraint performance of seat belt and airbag modules.

## Claims

1. An electronically controlled safety restraint system comprising
at least one electronically controlled airbag module,
at least one electronically controlled seat belt module and an electronic control unit connected to said airbag module and said seat belt module to control and synchronize the operation of said airbag module and said seat belt module continuously and electronically to provide an optimized airbag and seat belt restraint performance for maximum safety restraint protection and for minimized airbag and seat belt restraint load injuries.

2. An electronically controlled safety restraint system as set forth in claim 1 wherein said airbag module includes an inflatable airbag and an inflator for inflating said airbag at a variable rate of inflation to vary an occupant restraint load on an occupant.

3. An electronically controlled safety restraint system as set forth in any one of claim 1 or 2 wherein said seat belt module includes a seat belt for enveloping an occupant of a seat with a predetermined tension in said belt and means for varying said tension in said belt.

4. An electronically controlled safety restraint system as set forth in any one of claims 1 to 3 wherein said electronic control unit is electronically connected to said means and to said inflator for simultaneously decreasing said tension in said belt and varying said rate of inflation of said airbag to lower the occupant restraint load of said airbag on the occupant.

5. An electronically controlled safety restraint system as set forth in any one of claims 1 to 4 wherein said electronic control unit includes at least one sub-control unit electronically connected to said inflator and to said seat belt module to control and synchronize the operation of said inflator and said seat belt module continuously.

6. An electronically controlled safety restraint system as set forth in any one of claims 1 to 5 further comprising a plurality of sensors to deliver signals to said electronic control unit (ECU) representative of an occupant and crash conditions before and during a crash for processing and assessment.

7. An electronically controlled safety restraint system as set forth in claim 6 wherein said electronic control unit (ECU) has a safety algorithm stored therein for processing and assessment of said signals from said sensors and for directing electronic signals simultaneously to said airbag module and said seat belt module to affect the function and control of said airbag module and said seat belt module before and during a crash.

8. An electronically controlled safety restraint system as set forth in claim 6 wherein said plurality of sensors include a pressure sensor on said airbag and a tension sensor on said seat belt.
